(19) 

Europäisches
Patentamt
European
Patent Office
Office européen
des brevets

(11)  **EP 4 533 955 A1**

(12)  **EUROPEAN PATENT APPLICATION**
published in accordance with Art. 153(4) EPC

(43) Date of publication:
**09.04.2025  Bulletin 2025/15**

(21) Application number: **23811826.9**

(22) Date of filing: **23.05.2023**

(51) International Patent Classification (IPC):
**A23C 20/02** (2025.01)    **A23J 3/14** (2006.01)

(52) Cooperative Patent Classification (CPC):
**A23C 20/02; A23J 3/14**

(86) International application number:
**PCT/JP2023/019218**

(87) International publication number:
**WO 2023/228954 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.05.2022  JP 2022084394**

(71) Applicants:
• **Amano Enzyme U.S.A. Co., Ltd.
Elgin, Illinois 60124 (US)**

• **Amano Enzyme Inc.
Nagoya-shi
Aichi 460-8630 (JP)**

(72) Inventor: **OKUDA, Keita
Kakamigahara-shi, Gifu 509-0109 (JP)**

(74) Representative: **Müller-Boré & Partner
Patentanwälte PartG mbB
Friedenheimer Brücke 21
80639 München (DE)**

(54)  **METHOD FOR PRODUCING VEGETABLE-BASED CHEESE**

(57)  The purpose of the present invention is to provide a technique for producing plant cheese, with which it is possible to impart improved stretch property to a plant cheese. Improved stretch property is achieved in a plant cheese obtained through a method for producing a plant cheese that includes (a) a step for causing a protease to act on a material that contains a plant protein, (b) a step for deactivating the protease, and (c) a step for mixing in starch.

**EP 4 533 955 A1**

**Description**

Technical Field

The present invention relates to a production method for a plant cheese. More specifically, the present invention relates to a production method for a plant cheese having stretch property by heating.

Background Art

For various reasons such as the recent health boom, countermeasures against allergy problems, and religious reasons, plant protein foods have become popular as alternatives to animal protein foods.
A plant protein material is greatly different in component composition from an animal protein material. Therefore, in creating a plant protein food, various processing techniques have been studied to achieve flavor, texture, or the like closer to that of an animal protein food.
Among the properties of cheese using animal milk as a raw material, the stretching property by heating (Hereinafter, the property is also referred to as "stretch property".) is especially characteristic. This property is related to casein contained in animal milk, and also contributes to the appetite of cheese. On the other hand, a plant cheese, having a completely different protein composition, does not inherently have stretch property.
So far, studies have been made on imparting stretching property to plant cheeses not only in a heated state. PTL 1 has an object of providing a cheese-like food product that exhibits good stringiness even in a temperature range of 4 to 60°C, and discloses that in a cheese-like food product, acetylated or etherified starch is used, the moisture content is adjusted to a range of 47 to 90 wt%, and the hardness is adjusted to a range of 1 to 300 g/0.785 cm$^2$ in terms of rheometer measurement value at 5°C (plunger with a diameter of 1 cm, table speed of 5 cm/min, manufactured by HUDO KOGYO).

Citation List

Patent Literature

PTL 1: Japanese Patent Laid-open Publication No. 2006-254742

Summary of Invention

Technical Problem

So far, plant cheeses have been provided with stretching property basically by adjusting processed starch and water. However, such an adjustment has limitation in the effect of providing stretch property to a plant cheese. Accordingly, a technique capable of further improving this property has been desired.
Therefore, an object of the present invention is to provide a production technique for a plant cheese capable of providing improved stretch property to a plant cheese.

Solution to Problem

The present inventor has found that adding a protease to a material containing a plant protein, heat-deactivating the protease, and then mixing a starch improves the stretch property of the obtained plant cheese The present invention has been completed by further conducting studies based on this finding.
That is, the present invention provides inventions of the following embodiments.
Item 1. A production method for a plant cheese, the method including: a step (a) allowing a protease to act on a material containing a plant protein; a step (b) deactivating the protease; and a step (c) mixing a starch.
Item 2. The production method according to item 1, in which the protease to be used includes at least a filamentous fungus-derived protease.
Item 3. The production method according to item 1, in which the protease to be used includes a filamentous fungus-derived protease and/or a bacteria-derived protease.
Item 4. The production method according to item 2 or 3, in which the filamentous fungus-derived protease is a protease derived from a genus Aspergillus.
Item 5. The production method according to any one of items 1 to 4, in which a peptidase is further used in the step (a), and the peptidase is also deactivated in the step (b).
Item 6. The production method according to any one of items 1 to 5, in which in the step (a), the material containing a plant protein contains an organic acid.

Item 7. The production method according to any one of items 1 to 6, in which in the step (c), the starch is used in an amount of 0.2 to 1 part by weight with respect to 1 part by weight of the plant protein.

Item 8. The production method according to any one of items 1 to 7, in which the protease has a protease activity of 50 to 26000 U with respect to 1 g of the plant protein.

Item 9. A method for improving stretch property of a plant cheese, the method including, in producing a plant cheese: a step (a) allowing a protease to act on a material containing a plant protein; a step (b) deactivating the protease; and a step (c) mixing a starch.

Item 10. A plant cheese obtained by the production method according to any one of items 1 to 8.

Advantageous Effects of Invention

According to the present invention, a production technique for a plant cheese capable of providing improved stretch property to a plant cheese is provided. Description of Embodiments

1. Production method for plant cheese

The production method for a plant cheese of the present invention includes: a step (a) allowing a protease to act on a material containing a plant protein (hereinafter, also referred to as "step (a)"); a step (b) deactivating the protease (hereinafter, also referred to as "step (b)"); and a step (c) mixing a starch (hereinafter, also referred to as "step (c)"). The production method of the present invention includes the steps (a), (b), and (c) in this order. According to the present invention, the stretch property of the obtained plant cheese can be improved. In a preferred embodiment of the present invention, the obtained plant cheese can be improved in thermal melting characteristic in addition to stretch property. Hereinafter, the production method for a stretchable plant cheese of the present invention will be described in detail.

1-1. Step (a)

In the step (a), a protease is allowed to act on a material containing a plant protein. Thereby, an enzyme-treated product is obtained.

1-1-1. Material containing plant protein

The plant from which the plant protein is derived is not particularly limited, and is, for example, beans such as pea, soybean, broad bean, chick bean, or lentil; cereals such as barley, wheat, oat, rice, buckwheat, Japanese barnyard millet, and millet; and nuts such as almond, cashew nut, hazelnut, pecan nut, macadamia nut, pistachio, walnut, brazil nut, peanut, and coconut. As the plant protein derived from these plants, one kind may be used alone, or two or more kinds having different origins may be used in combination.

Among them, from the viewpoint of further improving the stretch property or from the viewpoint of also improving the thermal melting characteristic in addition to the above viewpoint, a protein from beans is preferable, proteins from pea, broad bean, chick bean, and lentil are more preferable, and a protein from pea is still more preferable.

The content of the plant protein in the material containing a plant protein is not particularly limited, and is, for example, 1 to 30 wt%. The content of the plant protein in the material is preferably 4 to 25 wt%, more preferably 9 to 20 wt%, and still more preferably 14 to 20 wt% from the viewpoint of further improving the stretch property or from the viewpoint of also improving the thermal melting characteristic in addition to the above viewpoint.

The material containing a plant protein can contain, as a component other than the plant protein, any material component used for a plant cheese (hereinafter, also referred to as "other material components"). Examples of other material components include plant oils and fats, thickening polysaccharides, starch, water, common salt, organic acid, and calcium salt. Among them, one or more of these components can be contained in the material containing a plant protein.

When the material containing a plant protein contains other material components, among other material components, an organic acid and water are preferably contained from the viewpoint of further improving the stretch property and also improving the thermal melting characteristic. The organic acid may be mixed with the enzyme-treated product in which the enzyme has been deactivated in the step (c), instead of being contained in the material containing a plant protein in this step. However, from the viewpoint of further improving the stretch property and also improving the thermal melting characteristic, the organic acid is preferably contained in the material containing a plant protein in this step.

The organic acid is not particularly limited, and examples thereof include lactic acid, citric acid, acetic acid, succinic acid, malic acid, fumaric acid, propionic acid, pyruvic acid, and olotic acid. These organic acids may be used singly or in combination of two or more kinds thereof. Among these organic acids, lactic acid is preferred.

When the organic acid is contained in the material containing a plant protein, the content of the organic acid in the material is not particularly limited, and is, for example, 0.1 to 1 wt%, and more preferably 0.3 to 0.5 wt% from the viewpoint of further improving the stretch property or from the viewpoint of also improving the thermal melting characteristic in addition to the above viewpoint.

When water is contained in the material containing a plant protein, the content of water in the material is not particularly limited, and is, for example, 45 to 70 wt%, preferably 50 to 65 wt%, and more preferably 55 to 60 wt% from the viewpoint of further improving the stretch property or from the viewpoint of also improving the thermal melting characteristic in addition to the above viewpoint.

In this step, among the above other material components, components other than the organic acid and water (plant oils and fats, thickening polysaccharides, starch, common salt, and calcium salt) are preferably not contained in the material containing a plant protein. However, the present invention does not exclude a case where components other than the organic acid and water are contained in the material containing a plant protein. For example, the amount of starch to be contained is preferably less than the amount contained in usual plant cheeses, and such an amount is, for example, less than 4 wt%, preferably less than 2 wt%, more preferably less than 1 wt%, and still more preferably less than 0.1 wt%. More specific examples of plant oils and fats, thickening polysaccharides (other than starch), starch, common salt, and calcium salt will be described in detail in "1-3. Step (c)".

1-1-2. Protease

In the present invention, the protease refers to an endo-type peptidase. The origin of the protease is not particularly limited. For example, filamentous fungus-derived proteases such as the genus Aspergillus, Mucor, Neurospora, Penicillium, Rhizomucor, Rhizopus, and Sclerotinia; yeast-derived proteases such as the genus Saccharomyces; bacteria-derived proteases such as the genus Bacillus and Geobacillus; and actinomycete-derived proteases such as the genus Streptomyces can be used. These proteases may be used singly or in combination of two or more kinds thereof.

From the viewpoint of further improving the stretch property or from the viewpoint of also improving the thermal melting characteristic in addition to the above viewpoint, among these proteases, at least a filamentous fungus-derived protease is preferably used, and a filamentous fungus-derived protease and a bacteria-derived protease are preferably used in combination. From the viewpoint of further improving the stretch property or from the viewpoint of also improving the thermal melting characteristic in addition to the above viewpoint, among filamentous fungus-derived proteases, proteases derived from Aspergillus oryzae and Aspergillus niger are preferable, and a protease derived from Aspergillus oryzae is more preferable. From the viewpoint of further improving the stretch property or from the viewpoint of also improving the thermal melting characteristic in addition to the above viewpoint, among bacteria-derived proteases, proteases derived from Bacillus stearothermophilus, Bacillus licheniformis, and Bacillus amyloliquefaciens, and the genus Diobacillus thereof are preferable, and a protease derived from Diobacillus stearothermophilus (including strains previously referred to as Bacillus stearothermophilus) is more preferable.

The protease can be used so that the protease activity per 1 g of the plant protein is, for example, 5 to 50000 U, 10 to 30000 U, or 50 to 26000 U. From the viewpoint of further improving the stretch property or from the viewpoint of also improving the thermal melting characteristic in addition to the above viewpoint, the protease can be used so that the protease activity per 1 g of the plant protein is preferably 200 to 24000 U, 240 to 22000 U, 300 to 20000 U, 350 to 15000 U, or 400 to 13000 U, more preferably 700 to 6000 U, and still more preferably 1100 to 3600 U, 1100 to 2900 U, or 1100 to 2300 U.

When the filamentous fungus-derived protease is used as the protease, the filamentous fungus-derived protease can be used so that the protease activity per 1 g of the plant protein is, for example, 20 to 30000 U, 100 to 25000 U, or 190 to 20000 U. From the viewpoint of further improving the stretch property or from the viewpoint of also improving the thermal melting characteristic in addition to the above viewpoint, the filamentous fungus protease can be used so that the protease activity per 1 g of the plant protein is preferably 300 to 10000 U or 400 to 7500 U, more preferably 500 to 5000 U, and still more preferably 900 to 3000 U, 1600 to 2500 U, or 1850 to 2000 U.

When the bacteria-derived protease is used as the protease, the bacteria-derived protease can be used so that the protease activity per 1 g of the plant protein is, for example, 5 to 10000 U, 10 to 8000 U, or 50 to 6000 U. From the viewpoint of further improving the stretch property or from the viewpoint of also improving the thermal melting characteristic in addition to the above viewpoint, the bacteria-derived protease can be used so that the protease activity per 1 g of the plant protein is preferably 100 to 3000 U, more preferably 200 to 1000 U, and still more preferably 250 to 600 U, or 250 to 300 U.

When the filamentous fungus-derived protease and the bacteria-derived protease are used in combination as the protease, the ratio of the amount of the filamentous fungus-derived protease and the bacteria-derived protease to be used is determined depending on the amount of each of the proteases to be used. From the viewpoint of further improving the stretch property or from the viewpoint of also improving the thermal melting characteristic in addition to the above viewpoint, the amount of the bacteria-derived protease to be used is preferably 0.05 to 5 U or 0.1 to 3 U, more preferably 0.15 to 2 U, still more preferably 0.2 to 1 U, and still more preferably 0.25 to 0.4 U, with respect to 1 U of the filamentous fungus-derived protease.

The protease activity is measured by the Folin method using casein as a substrate. That is, the protease activity is an enzyme activity, and 1 unit (1 U) is the enzyme amount to increase the Folin reagent coloring substance in terms of 1 $\mu$g of tyrosine per 1 minute when an enzyme reaction is carried out by a conventional method at a pH set according to the optimum pH of the measured protease using casein as a substrate.

1-1-3. Peptidase

From the viewpoint of further improving the stretch property and/or the thermal melting characteristic, the present invention may further include a step of treating with a peptidase (hereinafter, also referred to as "peptidase treatment step") in addition to the protease treatment step.

The peptidase treatment step may be performed simultaneously with the protease treatment step, or may be performed after the protease treatment step. That is, the material containing a plant protein may be subjected to a treatment in which both the protease and the peptidase act at the same time, or the material containing a plant protein may be subjected to a treatment in which the protease acts, and then further subjected to a treatment in which the peptidase acts.

In the present invention, the peptidase refers to an exo-type peptidase. The origin of the peptidase is not particularly limited. For example, fungi-derived peptidases such as the genus Rhizopus and Aspergillus; actinomycete-derived peptidases such as the genus Streptomyces; and bacteria-derived peptidases such as the genus Bacillus, Geobacillus, Lactobacillus, and Lactococcus can be used. More specifically, fungi-derived peptidases such as the genus Rhizopus and Aspergillus can be used. Still more specifically, peptidases such as the genus Rhizopus oryzae and Aspergillus oryzae can be used. These peptidases may be used singly or in combination of two or more kinds thereof.

From the viewpoint of further improving the stretch property or from the viewpoint of also improving the thermal melting characteristic in addition to the above viewpoint, among these peptidases, a peptidase derived from Rhizopus is preferable, and a peptidase derived from Rhizopus oryzae is more preferable.

The peptidase can be used so that the peptidase activity per 1 g of the plant protein is, for example, 0.001 to 1 U, preferably 0.005 to 0.6 U, more preferably 0.01 to 0.4 U, still more preferably 0.02 to 0.2 U, and still more preferably 0.03 to 0.1 U.

The peptidase activity is measured by a method based on the ninth edition of Japan's Specifications and Standards for Food Additives using L-leucyl-glycyl-glycine as a substrate. Specifically, the peptidase activity is an enzyme activity, and 1 unit (1 U) is the enzyme amount to increase the ninhydrin coloring substance in terms of 1 $\mu$mol of leucine per 1 minute when an enzyme reaction is carried out by a conventional method using L-leucyl-glycyl-glycine as a substrate.

1-1-4. Treatment conditions, etc.

The specific procedure of the protease treatment in this step is not particularly limited as long as the material containing a plant protein and the protease are brought into contact with each other under an environment where the protease effectively acts.

The enzyme treatment reaction temperature in this step is not particularly limited, and can be appropriately determined by those skilled in the art according to the optimal temperature of the enzyme to be used and the like, and is, for example, 40 to 60°C, preferably 45 to 55°C.

The enzyme treatment reaction time in this step is not particularly limited, and may be appropriately determined according to the preparation scale of the material containing a plant protein, and the like, and is, for example, 15 minutes or longer, preferably 20 minutes or longer. The upper limit of the range of the enzyme treatment reaction time is not particularly limited, and is, for example, 1 hour or less or 40 minutes or less.

1-2. Step (b)

In the step (b), the protease used in the step (a) is deactivated, or, when a peptidase is further used in the step (a), the peptidase is also deactivated. Thereby, an enzyme-treated product in which the enzyme has been deactivated is obtained.

For the deactivation method, the enzyme-treated product obtained in the step (a) may be subjected to conditions under which the used enzyme is deactivated. As the deactivation conditions, conditions for denaturing the protease or the protease and peptidase used in the step (a) may be appropriately selected, and heat deactivation is typically performed. Specific temperature conditions for heat deactivation may be set in accordance with the thermal properties of the protease or protease and peptidase actually used in the step (a), and examples thereof include 70°C or higher, preferably 80°C or higher, and more preferably 85°C or higher. The time for heat deactivation is not particularly limited, and is, for example, 10 to 20 minutes.

1-3. Step (c)

**In** the step (c), the enzyme-treated product obtained in the step (b), in which the enzyme has been deactivated, is mixed with a starch, thereby obtaining a plant cheese dough.

The starch is not particularly limited, and those capable of imparting stretch property to the plant cheese can be used without particular limitation. Specific examples of the plants from which the starch is derived include cassava, potato, sweet potato, and arrowroot. The starch derived from these plants may be used alone, or may be used in combination of two or more kinds derived from different plants.

From the viewpoint of further improving the stretch property or from the viewpoint of also improving the thermal melting characteristic in addition to the above viewpoint, among them, cassava starch (tapioca starch) and potato starch are preferable, and cassava starch (tapioca starch) is more preferable.

The amount of the starch mixed into the enzyme-treated product in which the enzyme has been deactivated is not particularly limited as long as the effect of the present invention can be obtained. The content thereof in the plant cheese dough after mixing is, for example, 4 wt% or more, and from the viewpoint of further improving the stretch property or from the viewpoint of also improving the thermal melting characteristic in addition to the above viewpoint, is preferably 5 wt% or more, more preferably 6 wt% or more, still more preferably 7 wt% or more.

The upper limit of the range of the amount of the starch mixed in the enzyme-treated product in which the enzyme has been deactivated is not particularly limited. From the viewpoint of appropriately blending a predetermined amount of the plant protein, the content thereof in the plant cheese dough after mixing is, for example, 20 wt% or less. **In** addition, since the production method of the present invention is excellent in the effect of improving the stretch property, the stretch property can be effectively improved even when the content of the starch is relatively small. From such a viewpoint, the upper limit of the range of the amount of the starch mixed in the enzyme-treated product in which the enzyme has been deactivated is preferably 17 wt% or less, more preferably 15 wt% or less, and still more preferably 13 wt% or less.

**In** addition, the ratio of the plant protein used for the preparation of the enzyme-treated product in which the enzyme has been deactivated and the starch in the step is determined according to the content of each of the components. The content of the starch is preferably 0.2 to 1 part by weight, more preferably 0.3 to 0.8 parts by weight, and still more preferably 0.4 to 0.6 parts by weight, with respect to 1 part by weight of the plant protein used in the preparation of the enzyme-treated product in which the enzyme has been deactivated.

**In** the step (c), in addition to the starch, any other material component used for the production of a plant cheese can be blended. Examples of such other material components include plant oils and fats, thickening polysaccharides, common salt, calcium salt, and organic acid.

The plant oils and fats are not particularly limited, and examples thereof include canola oil (rapeseed oil), coconut oil, corn oil, olive oil, soybean oil, peanut oil, walnut oil, almond oil, sesame oil, cottonseed oil, sunflower seed oil, safflower oil, fluxseed oil, palm oil, palm kernel oil, palm fruit oil, babassu oil, shea butter, mango butter, cocoa butter, wheat germ oil, and rice bran oil. These plant oils and fats may be used singly or in combination of two or more kinds thereof. From the viewpoint of further improving the stretch property or from the viewpoint of also improving the thermal melting characteristic in addition to the above viewpoint, among these plant oils and fats, canola oil (rapeseed oil), coconut oil, and sunflower oil are preferable, and canola oil (rapeseed oil) and coconut oil are more preferable.

When the enzyme-treated product in which the enzyme has been deactivated is mixed with the plant oils and fats, the mixing amount thereof is not particularly limited. From the viewpoint of further improving the stretch property or from the viewpoint of also improving the thermal melting characteristic in addition to the above viewpoint, the content thereof in the plant cheese dough after mixing is, for example, 4 to 30 wt%, preferably 6 to 25 wt%, more preferably 8 to 20 wt%, and still more preferably 9 to 15 wt%.

The thickening polysaccharide is not particularly limited, and examples thereof include locust bean gum, guar gum, carrageenan, xanthan gum, tragacanth gum, tamarind seed gum, pectin, gum arabic, curdlan, tara gum, gellan gum, ghatti gum, CMC (carboxymethyl cellulose), sodium alginate, and pullulan, and preferably include carrageenan. These thickening polysaccharides may be used singly or in combination of two or more kinds thereof. Among these thickening polysaccharides, carrageenan is preferable from the viewpoint of further improving the stretch property or from the viewpoint of also improving the thermal melting characteristic in addition to the above viewpoint.

When the enzyme-treated product in which the enzyme has been deactivated is mixed with the thickening polysaccharide, the mixing amount thereof is not particularly limited. From the viewpoint of further improving the stretch property or from the viewpoint of also improving the thermal melting characteristic in addition to the above viewpoint, the content thereof in the plant cheese dough after mixing is, for example, 0.1 to 2 wt%, more preferably 0.5 to 1.5 wt%, and still more preferably 0.8 to 1.2 wt%.

When the enzyme-treated product in which the enzyme has been deactivated is mixed with the common salt, the mixing amount thereof is not particularly limited. From the viewpoint of further improving the stretch property or from the viewpoint of also improving the thermal melting characteristic in addition to the above viewpoint, the content thereof in the plant cheese dough after mixing is, for example, 0.1 to 2 wt%, and more preferably 0.5 to 0.7 wt%.

The calcium salt is not particularly limited, and examples thereof include calcium gluconate, calcium lactate, and calcium phosphate. These calcium salts may be used singly or in combination of two or more kinds thereof. Among these calcium salts, calcium phosphate is preferable from the viewpoint of further improving the stretch property or from the viewpoint of also improving the thermal melting characteristic in addition to the above viewpoint.

When the enzyme-treated product in which the enzyme has been deactivated is mixed with the calcium salt, the mixing amount thereof is not particularly limited. From the viewpoint of further improving the stretch property or from the viewpoint of also improving the thermal melting characteristic in addition to the above viewpoint, the content thereof in the plant cheese dough after mixing is, for example, 0.5 to 4 wt%, and more preferably 1.5 to 2.0 wt%.

The organic acid is not particularly limited, and specific examples thereof include lactic acid, citric acid, acetic acid, succinic acid, malic acid, fumaric acid, propionic acid, pyruvic acid, and olotic acid as described above in "1-1-1. Material containing plant protein". These organic acids may be used singly or in combination of two or more kinds thereof. Among these organic acids, lactic acid is preferred.

When the enzyme-treated product in which the enzyme has been deactivated is mixed with the organic acid, the mixing amount thereof is not particularly limited. From the viewpoint of further improving the stretch property or from the viewpoint of also improving the thermal melting characteristic in addition to the above viewpoint, the content thereof in the plant cheese dough after mixing is, for example, 0.1 to 1 wt%, and more preferably 0.3 to 0.5 wt%.

1-4. Other steps

In addition to the above steps (a) to (c), the production method of the present invention may further include any other step for obtaining a plant cheese.

Examples of the above other steps include a step of heating the plant cheese dough obtained in the step (c) to cook into a plant cheese, and a step of cooling the obtained plant cheese.

In the step of heating the plant cheese dough, the heating temperature can be selected and set, without particular limitation, a temperature condition where the plant cheese dough exhibits stretch property derived from the starch mixed in the step (c). Specific examples of the temperature condition include, for example, 70 to 110°C, preferably 80 to 100°C, and more preferably 85 to 95°C.

In the step of heating the plant cheese dough, the heating time is not particularly limited, and is, for example, 5 to 30 minutes, preferably 10 to 20 minutes.

In the cooling step, the obtained plant cheese can be appropriately cooled in a state of being filled in a container having an appropriate size. In the cooling step, the temperature is not particularly limited, and is, for example, 2 to 5°C.

2. Method for improving stretch property of plant cheese

As described above, the stretch property of the obtained plant cheese can be improved by performing the steps (a), (b), and (c) in this order in the production of a plant cheese. Accordingly, the present invention also provides a method for improving stretch property of a plant cheese, the method including, in producing a plant cheese: a step (a) allowing a protease to act on a material containing a plant protein; a step (b) deactivating the protease; and a step (c) mixing a starch.

In the method for improving stretch property of the present invention, the kind of the component to be used, the amount to be used, and the like are as described in the section of "1. Production method for plant cheese".

3. Plant cheese

The plant cheese obtained by the production method shown in the section of "1. Production method for plant cheese" has improved stretch property. Accordingly, the present invention also provides a plant cheese obtained by the production method for a plant cheese, the method including: a step (a) allowing a protease to act on a material containing a plant protein; a step (b) deactivating the protease; and a step (c) mixing a starch.

In the plant cheese of the present invention, the kind of the contained component, the amount to be used, and the like are as described in the section of "1. Production method for plant cheese".

Examples

Hereinafter, the present invention will be specifically described with reference to Examples, but the present invention is not to be construed as being limited to the following Examples.

[Enzyme used]

Enzymes shown in the following table were used. All the enzymes used are manufactured by Amano Enzyme Inc.

[Table 1]

| Filamentous fungus protease | Protease derived from Aspergillus oryzae |
|---|---|
| Bacteria protease | Protease derived from Bacillus stearothermophilus (reclassified in Geobacillus stearothermophilus at present) |
| Filamentous fungus peptidase | Peptidase derived from Rhizopus oryzae |

[Method for measuring protease activity]

After 5 mL of a 0.6% (v/w) casein solution (0.05 mol/L sodium hydrogen phosphate, pH 8.0 [in the case of bacteria protease] or 0.7% (v/w) lactic acid, pH 3.0 [in the case of filamentous fungus protease]) was warmed at 37°C for 10 minutes, 1 mL of a sample solution containing a protease was added, and the mixture was immediately shaken. This solution was allowed to stand at 37°C for 10 minutes, 5 mL of a trichloroacetic acid test solution (containing 1.8% trichloroacetic acid, 1.8% sodium acetate, and 0.33 mol/L acetic acid [in the case of bacteria protease] or containing 0.44 mol/L trichloroacetic acid [in the case of filamentous fungus protease]) was then added, and the mixture was shaken, allowed to stand again at 37°C for 30 minutes, and filtered. The first filtrate (3 mL) was removed, and the next filtrate (2 mL) was weighed. Then, 5 mL of a 0.55 mol/L sodium carbonate test solution and 1 mL of a Folin test solution (1 → 3) were added, and the mixture was shaken well and left at 37°C for 30 minutes. The liquid (enzyme reaction liquid) was measured for absorbance AT at a wavelength of 660 nm using water as a control.

Separately, a liquid (blank) that was operated in the same manner as the above-described enzyme reaction liquid was measured for absorbance AB except that 1 mL of a sample solution containing a protease was weighed, and 5 mL of a trichloroacetic acid test solution (containing 1.8% trichloroacetic acid, 1.8% sodium acetate, and 0.33 mol/L acetic acid [in the case of bacteria protease] or containing 0.44 mol/L trichloroacetic acid [in the case of filamentous fungus protease]) was added and shaken, then 5 mL of a 0.6% (v/w) casein solution (0.05 mol/L sodium hydrogen phosphate, pH 8.0 [in the case of bacteria protease] or 0.7% (v/w) lactic acid, pH 3.0 [in the case of filamentous fungus protease]) was added, and the mixture was immediately shaken and allowed to stand at 37°C for 30 minutes. One unit (1 U) was the enzyme amount to increase the Folin reagent coloring substance in terms of 1 μg of tyrosine per 1 minute.

Then 1 mL, 2 mL, 3 mL, and 4 mL of a 1 mg/mL tyrosine standard stock solution (0.2 mol/L hydrochloric acid) were each weighed, and a 0.2 mol/L hydrochloric acid test solution was added thereto to become 100 mL. To 2 mL of each weighed solution, 5 mL of a 0.55 mol/L sodium carbonate test solution and 1 mL of a Folin test solution (1 → 3) were added, the mixture was immediately shaken, and the mixture was left to stand at 37°C for 30 minutes. These liquids were measured for absorbances A1, A2, A3, and A4 at a wavelength of 660 nm, using, as a control, a liquid obtained by weighing 2 mL of a 0.2 mol/L hydrochloric acid test solution and operating in the same manner as described above. The absorbances A1, A2, A3, and A4 were plotted on the vertical axis, and the tyrosine amount (μg) in 2 mL of each liquid was plotted on the horizontal axis to create a calibration curve, and the tyrosine amount (μg) was determined for an absorbance difference of 1.

[Mathematical formula 1]

$$\text{Protease activity (U/g, U/mL)} = (AT - AB) \times F \times 11/2 \times 1/10 \times 1/M$$

AT: Absorbance of enzyme reaction liquid
AB: Absorbance of blank
F: Tyrosine amount for absorbance difference 1 determined by tyrosine calibration curve (μg)
11/2: Conversion factor into total liquid amount after reaction stop
1/10: Conversion factor into per 1 minute of reaction time
M: Sample amount in 1 mL of sample solution (g or mL)

[Method for measuring peptidase activity]

An appropriate amount of an enzyme was weighed, and water, a potassium phosphate buffer solution (0.005 mol/L) having a pH of 7.0, or a potassium phosphate buffer solution (0.005 mol/L, pH 7.0, containing zinc sulfate) was added thereto to make a 50 mL solution or uniform dispersion, or they were further diluted 10 times, 100 times, or 1000 times by using water or the same buffer solutions. Thereby, sample liquids were obtained.

Then, 30 mg of L-leucyl-glycyl-glycine was weighed, and dissolved by adding a potassium phosphate buffer solution (0.05 mol/L) having a pH of 7.0 to become 50 mL. This solution was diluted 10 times with a potassium phosphate buffer solution (0.05 mol/L) having a pH of 7.0 to obtain a substrate solution. This substrate solution was prepared at the time of use.

In a stoppered test tube, 1 mL of the substrate solution was weighed, and heated at 37°C for 5 minutes, then 0.1 mL of the sample liquid was added and mixed, and the mixture was heated at 37°C for 60 minutes, then heated in a boiling water bath for 5 minutes, and cooled to room temperature. Then, to the liquid, 2 mL of a ninhydrin-2-methoxyethanol-citrate buffer solution test solution and 0.1 mL of a tin (II) chloride test solution were added, and the mixture was stoppered and heated in a boiling water bath for 20 minutes. After cooling, 10 mL of 1-propanol (1 → 2) was added and shaken to obtain a test solution. Separately, 0.1 mL of the sample liquid was weighed in a stoppered test tube, and heated in a boiling water bath for 5 minutes. After cooling, 1 mL of the substrate solution was added and mixed, and the mixture was heated at 37°C for 5 minutes and then cooled to room temperature. Then, to the liquid, 2 mL of a ninhydrin-2-methoxyethanol-citrate buffer solution test solution and 0.1 mL of a tin (II) chloride test solution were added, and the mixture was stoppered and heated in a boiling water bath for 20 minutes. After cooling, 10 mL of 1-propanol (1 → 2) was added and shaken to prepare a comparative solution. The test solution and the comparative solution were measured for absorbance at a wavelength of 570 nm within 5 to 30 minutes after preparation. The absorbance of the test solution was larger than the absorbance of the comparative solution. When the test solution and the comparative solution to be measured for absorbance were cloudy, centrifugation was performed, and the supernatant was measured. One unit (1 U) was the enzyme amount to increase the ninhydrin coloring substance in terms of 1 μmol of leucine per 1 minute.

[Mathematical formula 2]

$$\text{Peptidase activity (U/g, U/mL)} = (AT - AB) \times F \times (1/0.1) \times (1/60) \times n$$

AT: Absorbance of enzyme reaction liquid

AB: Absorbance of blank

F: Leucine amount for absorbance difference 1 determined by calibration curve (μmol)

0.1: Enzyme liquid amount (mL)

60: Reaction time (min)

N: Dilution

[Materials used]

Commercially available materials shown in the following table were used.

[Table 2]

|  | Product name | Manufacturer |
|---|---|---|
| Pea protein material | Pea protein 870 MV (Protein content 80 wt%) | PURIS |
| Tapioca starch | Tapioca Starch | EARTHBORN ELEMENT |
| Coconut oil | Refined COCONUT OIL | Nutiva |
| Canola oil | Expeller Pressed Non-GMO Canola Oil | NATIVE HARVEST |
| Tricalcium phosphate | Tricalcium phosphate | Eastchem |
| Lactic acid | Lactic acid 88% | Home Brew Ohio |
| κ-carrageenan | Kappa Carrageenan | CAPE CRYSTAL BRANDS |
| Salt | Ionized salt | MORTON |

[Test Example 1]

(1) Production of plant cheese

(1-1) Production of plant cheese of Comparative Examples 1 and 2

Pure water (RO water) was placed in a Thermomix mixer (product name: Thermomix TM6), and pea protein material, tapioca starch (only in Comparative Example 1), canola oil, coconut oil, common salt, tricalcium phosphate, lactic acid (only in Comparative Example 1), carrageenan, and enzymes shown in Tables 3A to 3C were added in the indicated amounts while stirring at 50°C at a speed of 3. The mixture was stirred at 50°C for 15 minutes at a speed of 3, then the temperature was raised to 85°C, and the mixture was stirred at a speed of 3 for 7 minutes (treatment under enzyme deactivation conditions). Only in Comparative Example 2, tapioca starch and lactic acid were then added and mixed.
The obtained mixture was filled in a plastic syringe (diameter: 30 mm) in an appropriate amount and in an aluminum container (bottom inner diameter: diameter 5 cm) in an amount of 100 g per container (two containers), cooled to 4°C with a cover, and stored. Thereby, a plant cheese (n = 2 for each comparative example) was obtained.

(1-2) Production of plant cheese of Comparative Examples 3 and 4, and Examples 1 to 10

Pure water (RO water) was placed in a Thermomix mixer (product name: Thermomix TM6), and lactic acid (other than in Example 1), pea protein material, and tapioca starch (only in Comparative Example 4), and enzymes shown in Tables 3A to 3C were added in the indicated amounts while stirring at 50°C at a speed of 3. The mixture was stirred at 50°C for 30 minutes and at a speed of 3 (step (a)), then the temperature was raised to 90°C and the mixture was stirred at a speed of 3 for 15 minutes (treatment under enzyme deactivation conditions, step (b)), and tapioca starch (other than in Comparative Example 4), canola oil, coconut oil, tricalcium phosphate, lactic acid (only in Example 1), salt, and carrageenan were added and mixed in the amounts shown in Tables 3A to 3C (step (c)). After further stirred at 90°C for 15 minutes and at a speed of 3, the mixture was filled in a plastic syringe (diameter: 30 mm) in an appropriate amount and in an aluminum container (bottom inner diameter: diameter 5 cm) in an amount of 100 g per container (two containers), cooled to 4°C with a cover, and stored. Thereby, a plant cheese (n = 2 for each) was obtained.

(2) Stretch property evaluation

The plant cheese filled in the aluminum container was used as a sample, and the sample was heated for 30 minutes using a steam oven set at 110°C (in order to eliminate the influence of moisture evaporation during heating). Thereafter, the sample was taken out from the steam oven, and after confirming that the internal temperature of the sample reached 70°C, the sample was stirred with a fork. After confirming that the fork was covered with the sample, the tip of the fork was lifted at 5 cm/sec by scooping up the sample with the fork, and the distance (stretch length (mm)) between the lifting start point of the tip of the fork and the point where the stretch of the sample was broken was measured. The stretch length was derived as an average value obtained by testing the two prepared samples in the same manner for each Example/Comparative Example. Furthermore, the relative value of the stretch length of the plant cheese of each of Comparative Examples and Examples was derived as the stretch property improvement evaluation index when the stretch length of the plant cheese of Comparative Example 1 produced without using an enzyme agent was 1. When the stretch property improvement evaluation index is more than 1, it is evaluated that improved stretch property is imparted. A larger stretch property improvement evaluation index is evaluated as having a higher effect of improving the stretch property. The results are shown in Tables 3A to 3C.

(3) Thermal melting characteristic evaluation

The plant cheese filled in the plastic syringe was taken out and cut into a sample having a thickness of 5 mm. The sample was heated for 15 minutes using a steam oven set at 110°C. Thereafter, the plant cheese was taken out from the steam oven, and the diameter (mm) of the heat-melted plant cheese was measured. The relative value of the diameter of the heated sample was derived as the post-heat melting diameter expansion rate when the diameter before heating was 1. Furthermore, the relative value of the post-heat melting diameter expansion rate of the plant cheese of each of Comparative Examples and Examples was derived as the thermal melting characteristic improvement evaluation index when the post-heat melting diameter expansion rate of the plant cheese of Comparative Example 1 produced without using an enzyme agent was 1. A larger thermal melting characteristic improvement evaluation index is evaluated as having a higher effect of improving the thermal melting characteristic. The results are shown in Tables 3A to 3C.

10

[Table 3A]

| | | Comparative Example 1 | Comparative Example 2 | Comparative Example 3 | Comparative Example 4 | Example 1 | Example 2 |
|---|---|---|---|---|---|---|---|
| RO water | | 57.4 | 57.4 | 57.4 | 57.4 | 57.4 | 57.4 |
| Pea protein material | | 18.8 | 18.8 | 18.8 | 18.8 | 18.8 | 18.8 |
| | <Protein in material> | <15> | <15> | <15> | <15> | <15> | <15> |
| Tapioca starch | | 10 | 10 | 10 | 10 | 10 | 10 |
| Canola oil | | 2 | 2 | 2 | 2 | 2 | 2 |
| Coconut oil | | 8 | 8 | 8 | 8 | 8 | 8 |
| Common salt | | 0.6 | 0.6 | 0.6 | 0.6 | 0.6 | 0.6 |
| Tricalcium phosphate | | 1.8 | 1.8 | 1.8 | 1.8 | 1.8 | 1.8 |
| Lactic acid | | 0.4 | 0.4 | 0.4 | 0.4 | 0.4 | 0.4 |
| $\kappa$-carrageenan | | 1 | 1 | 1 | 1 | 1 | 1 |
| Bacteria protease | | - | - | - | [90 U/g] | [90 U/g] | [90 U/g] |
| Filamentous fungus protease | | - | - | - | - | - | - |
| Peptidase | | - | - | - | [0.042 U/g] | [0.042 U/g) | [0.042 U/g] |
| Total | | 100 | 100 | 100 | 100 | 100 | 100 |
| Stretch length (mm) | | 40 | 55 | 80 | 75 | 110 | 130 |
| Stretch property improvement evaluation index | | 1.0 | 1.4 | 2.0 | 1.9 | 2.8 | 3.3 |
| Thermal melting characteristic improvement evaluation index | | 1.0 | 1.0 | 1.1 | 1.0 | 1.1 | 1.3 |
| Adding starch after treatment under enzyme deactivation condition | Not performed | ✓ | | | ✓ | | |
| | Performed | | ✓ | ✓ | | ✓ | ✓ |
| Timing of adding lactic acid | "Before" treatment under enzyme deactivation condition | ✓ | | ✓ | ✓ | | ✓ |
| | "After" treatment under enzyme deactivation condition | | ✓ | | | ✓ | |

In the table, the numerical value indicating the blending amount of each component is wt%.
The numerical value represented by [ ] indicating the blending amount of an enzyme is an activity value per 1 g of a protein.

**EP 4 533 955 A1**

[Table 3B]

| | | Example 3 | Example 4 | Example 5 | Example 6 | Example 7 | Example 8 |
|---|---|---|---|---|---|---|---|
| RO water | | 57.4 | 57.4 | 57.4 | 57.4 | 57.4 | 57.4 |
| Pea protein material | | 18.8 | 18.8 | 18.8 | 18.8 | 18.8 | 18.8 |
| | <Protein in material> | <15> | <15> | <15> | <15> | <15> | <15> |
| Tapioca starch | | 10 | 10 | 10 | 10 | 10 | 10 |
| Canola oil | | 2 | 2 | 2 | 2 | 2 | 2 |
| Coconut oil | | 8 | 8 | 8 | 8 | 8 | 8 |
| Common salt | | 0.6 | 0.6 | 0.6 | 0.6 | 0.6 | 0.6 |
| Tricalcium phosphate | | 1.8 | 1.8 | 1.8 | 1.8 | 1.8 | 1.8 |
| Lactic acid | | 0.4 | 0.4 | 0.4 | 0.4 | 0.4 | 0.4 |
| κ-carrageenan | | 1 | 1 | 1 | 1 | 1 | 1 |
| Bacteria protease | | [90 U/g] | [280 U/g] | - | - | - | - |
| Filamentous fungus protease | | - | - | [300 U/g] | [935 U/g] | [1800 U/g] | [1875 U/g] |
| Peptidase | | - | - | - | - | - | - |
| Total | | 100 | 100 | 100 | 100 | 100 | 100 |
| Stretch length (mm) | | 100 | 120 | 110 | 140 | 140 | 150 |
| evaluation index | | 2.5 | 3.0 | 2.8 | 3.5 | 3.5 | 3.8 |
| Thermal melting characteristic improvement evaluation index | | 1.2 | 1.2 | 1.3 | 1.3 | 1.3 | 1.3 |
| Adding starch after treatment under enzyme deactivation condition | Not performed | | | | | | |
| | Performed | ✓ | ✓ | ✓ | ✓ | ✓ | ✓ |
| Timing of adding lactic acid | "Before" treatment under enzyme deactivation condition | ✓ | ✓ | ✓ | ✓ | ✓ | ✓ |
| | "After" treatment under enzyme deactivation condition | | | | | | |

In the table, the numerical value indicating the blending amount of each component is wt%.
The numerical value represented by [ ] indicating the blending amount of an enzyme is an activity value per 1 g of a protein.

[Table 3C]

| | | Example 9 | Example 10 |
|---|---|---|---|
| RO water | | 57.4 | 57.4 |
| Pea protein material | | 18.8 | 18.8 |
| | <Protein in material> | <15> | <15> |
| Tapioca starch | | 10 | 10 |

(continued)

| | Example 9 | Example 10 |
|---|---|---|
| Canola oil | 2 | 2 |
| Coconut oil | 8 | 8 |
| Common salt | 0.6 | 0.6 |
| Tricalcium phosphate | 1.8 | 1.8 |
| Lactic acid | 0.4 | 0.4 |
| κ-carrageenan | 1 | 1 |
| Bacteria protease | [280 U/g] | [280 U/g] |
| Filamentous fungus protease | [935 U/g] | [1875 U/g] |
| Peptidase | - | - |
| Total | 100 | 100 |
| Stretch length (mm) | 160 | 160 |
| Stretch property improvement evaluation index | 4.0 | 4.0 |
| Thermal melting characteristic improvement evaluation index | 1.4 | 1.3 |
| Adding starch after treatment under enzyme deactivation condition | Not performed | | |
| | Performed | ✓ | ✓ |
| Timing of adding lactic acid | "Before" treatment under enzyme deactivation condition | ✓ | ✓ |
| | "After" treatment under enzyme deactivation condition | | |

In the table, the numerical value indicating the blending amount of each component is wt%.
The numerical value represented by [ ] indicating the blending amount of an enzyme is an activity value per 1 g of a protein.

As is clear from Tables 3A to 3C, as compared with the stretch property of the plant cheese produced without using a protease and without adding a starch after the treatment under an enzyme deactivation condition (Comparative Example 1), the plant cheese produced by adding a starch after the treatment under an enzyme deactivation condition (Comparative Examples 2 and 3) and the plant cheese produced using a protease (Comparative Example 4, Examples 1 to 10) both had improved stretch property. Among them, the effect of improving the stretch property was especially remarkable in the plant cheese produced by using a protease and adding a starch after the treatment under an enzyme deactivation condition (Examples 1 to 10). Since the plant cheese excellent in stretch property obtained in Examples 1 to 10 exhibited substantially no stretch property before heating and exhibited excellent stretch property by heating, it was confirmed that the thermal property similar to those observed in animal cheese were reproduced.

Furthermore, as shown in Tables 3A and 3B, among Examples 1 to 10, Examples 2 to 10 also achieved an effect of improving the thermal melting characteristic, in which the timing of adding lactic acid (organic acid) was before the treatment under an enzyme deactivation treatment condition.

Specifically, as is apparent from Table 3A, in comparison between the case where lactic acid (organic acid) was added before the enzyme treatment and starch was not added after the treatment under an enzyme deactivation condition (specifically, Comparative Example 1 and Comparative Example 4) and the case where starch was added (Comparative Example 3 and Example 2, respectively), the stretch property and the thermal melting characteristic were improved in the latter, and in particular, the effect of improving thermal melting characteristic was more remarkable in the case of using a protease than in the case of not using a protease (that is, Example 2 in comparison with Comparative Example 4 is more remarkable than Comparative Example 3 in comparison with Comparative Example 1). That is, it is recognized that the effect of improving the thermal melting characteristic shown in Example 2 (and Examples 3 to 10) is a specific effect due to both the condition of adding starch after the treatment under an enzyme deactivation condition and the condition of using a protease.

Specifically, as is apparent from Table 3A, in comparison between the case where starch was added after the treatment under an enzyme deactivation condition and lactic acid (organic acid) was added after the enzyme treatment (specifically, Comparative Example 2 and Example 1) and the case where lactic acid (organic acid) was added before the enzyme treatment (Comparative Example 3 and Example 2, respectively), the stretch property and the thermal melting characteristic were improved in the latter, and in particular, the effect of improving the thermal melting characteristic was more remarkable in the case of using a protease than in the case of not using a protease (that is, Example 2 in comparison with Example 1 is more remarkable than Comparative Example 3 in comparison with Comparative Example 2). That is, it is recognized that the effect of improving the thermal melting characteristic shown in Example 2 (and Examples 3 to 10) is a specific effect due to both the condition of adding lactic acid (organic acid) before the enzyme treatment and the condition of using a protease.

**Claims**

1. A production method for a plant cheese, the method comprising:

   a step (a) allowing a protease to act on a material containing a plant protein;
   a step (b) deactivating the protease; and
   a step (c) mixing a starch.

2. The production method according to claim 1, wherein the protease to be used includes at least a filamentous fungus-derived protease.

3. The production method according to claim 1, wherein the protease to be used includes a filamentous fungus-derived protease and/or a bacteria-derived protease.

4. The production method according to claim 2 or 3, wherein the filamentous fungus-derived protease is a protease derived from a genus Aspergillus.

5. The production method according to claim 1, wherein a peptidase is further used in the step (a), and the peptidase is also deactivated in the step (b).

6. The production method according to claim 1, wherein in the step (a), the material containing a plant protein contains an organic acid.

7. The production method according to claim 1, wherein in the step (c), the starch is used in an amount of 0.2 to 1 part by weight with respect to 1 part by weight of the plant protein.

8. The production method according to claim 1, wherein the protease has a protease activity of 50 to 26000 U with respect to 1 g of the plant protein.

9. A method for improving stretch property of a plant cheese, the method comprising, in producing a plant cheese:

   a step (a) allowing a protease to act on a material containing a plant protein;
   a step (b) deactivating the protease; and
   a step (c) mixing a starch.

10. A plant cheese obtained by the production method according to claim 1.

## INTERNATIONAL SEARCH REPORT

International application No.

**PCT/JP2023/019218**

### A. CLASSIFICATION OF SUBJECT MATTER

*A23C 20/02*(2021.01)i; *A23J 3/14*(2006.01)i
FI: A23C20/02; A23J3/14

According to International Patent Classification (IPC) or to both national classification and IPC

### B. FIELDS SEARCHED

Minimum documentation searched (classification system followed by classification symbols)

A23C20/02; A23J3/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | WO 2021/193892 A1 (FUJI OIL HOLDINGS INC.) 30 September 2021 (2021-09-30) claims, paragraphs [0017]-[0026], examples | 1, 6, 8, 10 |
| Y | | 1-10 |
| Y | JP 3-224448 A (TSUMURA, Daijiro) 03 October 1991 (1991-10-03) claims, page 3, upper left column, lines 3-19, examples | 1-10 |
| Y | WO 2018/151197 A1 (AJINOMOTO CO., INC.) 23 August 2018 (2018-08-23) paragraphs [0014]-[0017] | 1-10 |
| Y | JP 2016-502868 A (IMPOSSIBLE FOODS INC.) 01 February 2016 (2016-02-01) claims, paragraphs [0211]-[0215] | 1-10 |
| A | JP 2018-516078 A (CARGILL, INC.) 21 June 2018 (2018-06-21) claims | 1-10 |
| P, A | WO 2022/181809 A1 (AMANO ENZYME U.S.A. CO., LTD.) 01 September 2022 (2022-09-01) claims | 1-10 |

☑ Further documents are listed in the continuation of Box C.　　☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 July 2023** | **01 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 533 955 A1**

<table>
<tr><td colspan="2" style="text-align:center;"><strong>INTERNATIONAL SEARCH REPORT</strong></td><td>International application No.<br><strong>PCT/JP2023/019218</strong></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| P, A | WO 2023/033188 A1 (AJINOMOTO CO., INC.) 09 March 2023 (2023-03-09)<br>    claims, examples | 1-10 |
| P, A | WO 2022/202558 A1 (FUJI OIL HOLDINGS INC.) 29 September 2022 (2022-09-29)<br>    claims, examples | 1-10 |
| P, A | KR 10-2022-0167828 A (TAE KYUNG NONG SAN CO., LTD.) 22 December 2022<br>(2022-12-22)<br>    claims, examples | 1-10 |
| P, A | WO 2022/203577 A1 (AAK AB) 29 September 2022 (2022-09-29)<br>    claims, page 15 | 1-10 |

Form PCT/ISA/210 (second sheet) (January 2015)

INTERNATIONAL SEARCH REPORT
Information on patent family members

International application No.

**PCT/JP2023/019218**

| Patent document cited in search report | | | Publication date (day/month/year) | Patent family member(s) | | | Publication date (day/month/year) |
|---|---|---|---|---|---|---|---|
| WO | 2021/193892 | A1 | 30 September 2021 | US claims, paragraphs [0022]-[0044], examples | 2023/0094989 | A1 | |
| | | | | EP | 4129076 | A1 | |
| | | | | CN | 115334890 | A | |
| | | | | KR | 10-2022-0160574 | A | |
| JP | 3-224448 | A | 03 October 1991 | (Family: none) | | | |
| WO | 2018/151197 | A1 | 23 August 2018 | (Family: none) | | | |
| JP | 2016-502868 | A | 01 February 2016 | US claims, paragraphs [0234]-[0238] | 2015/0305361 | A1 | |
| | | | | EP | 2943077 | A1 | |
| | | | | CN | 105050422 | A | |
| | | | | KR | 10-2015-0105979 | A | |
| JP | 2018-516078 | A | 21 June 2018 | US claims | 2019/0059408 | A1 | |
| | | | | EP | 3302079 | A1 | |
| | | | | CN | 107666831 | A | |
| WO | 2022/181809 | A1 | 01 September 2022 | (Family: none) | | | |
| WO | 2023/033188 | A1 | 09 March 2023 | (Family: none) | | | |
| WO | 2022/202558 | A1 | 29 September 2022 | (Family: none) | | | |
| KR | 10-2022-0167828 | A | 22 December 2022 | (Family: none) | | | |
| WO | 2022/203577 | A1 | 29 September 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006254742 A